# EUROPÄISCHE PATENTANMELDUNG

(11) **EP 1 826 506 A2**
(43) Veröffentlichungstag der Anmeldung: **29.08.2007**
(21) Anmeldenummer: 07003640.5
(22) Anmeldetag: 22.02.2007
(51) Int. Cl.: F24J 2/46

(54) **Kollektorgehäuse und Verfahren zu seiner Herstellung**

(30) Priorität: 27.02.2006 DE 102006009494
(71) Anmelder: Wagner & Co. Solartechnik GmbH, 35091 Cölbe (DE)
(72) Erfinder: Wagner, Andreas, 35091 Cölbe (DE)
(74) Vertreter: Buchhold, Jürgen

(57) **Zusammenfassung**

Bei einem Kollektorgehäuse (10) zur Aufnahme eines Solarabsorbers (S) ist eine rechteckige Abdeck-Glasscheibe (14) von einem Rahmen (15) umschlossen, der zusammenhängende oder zusammengesetzte Rahmenleisten (25) mit Rippen (26) hat, welche die Glasscheibe (14) an ihrem Umfang formschlüssig fassen. Zum Herstellen des Gehäuses (10) wird ein entsprechend dem Umfang abgelängter Profilstrang (16) mit einseitig quer zur Strangrichtung verlaufenden Rippen (26) verwendet, der in jeweils Ecken (32) zugeordneten Abständen mit Gehrungsschnitten (20) versehen wird, so daß er an Gehrungskanten (22) zusammenhängende Rahmenleisten (25) bildet. An der unteren Rahmenleiste (35) wird der obere/innere Teil der Rippen (26) soweit entfernt, daß eine Leistenkante (28) stehenbleibt. Der an den Gehrungskanten (22) jeweils rechtwinklig eingefaltete Profilstrang wird zu einem Rahmen (15) mit einer Aufnahmenut (38) zusammengebogen und an seinen Enden fixiert, worauf die Glasscheibe (14) in die von den Rippen (26) definierte Nut (38) des gebildeten Rahmens (15) von unten über die Leistenkante (28) hinweg so eingeschoben wird, daß das untere Scheiben-Ende (18) sich daran formschlüssig abstützt.

## Beschreibung

Die Erfindung bezieht sich auf ein Kollektorgehäuse gemäß dem Oberbegriff von Anspruch 1 und auf ein Verfahren zu seiner Herstellung gemäß dem Oberbegriff von Anspruch 10.

Zur Wärmegewinnung dienen unter anderem Sonnenkollektoren mit beschichteten Solarabsorbern, die unter einer Glasabdeckung einen Wärmeübertrager enthalten und möglichst steil zur mittleren Sonneneinstrahlungs-Richtung angeordnet werden, vor allem auf geneigten Dächern. In der Praxis haben sich dreierlei Montagen bewährt, nämlich die Freiaufstellung, bei der die Kollektoren mit einstellbarem Neigungswinkel z.B. an Fundamenten oder Masten installiert werden; ferner die Indach-Montage in einer Ebene mit den Dachziegeln; und schließlich die Aufdach-Montage, zu der man am Dachstuhl Sparrenanker mit Schienen befestigt, auf welche die Kollektoren aufgesetzt werden.

Stets ist für die Montage ein stabiles Gehäuse nötig, das typisch einen aus Aluminiumprofilen zusammengesetzten Rahmen aufweist, der die Glasabdeckung abgedichtet einfaßt. Dazu dienen entweder einzelne Profilstücke, die mit Eckteilen verbunden werden, oder zusammenhängende Profilabschnitte, die zur Rahmenfaltung Gehrungseinschnitte an den vier Ecken benötigen. Außen überstehende Ränder können als Wasserablaufrippen oder für Montagenuten benutzt werden. Weil man innen Stützteile für Dichtungs- und Wärmedämm-Material braucht, sind die Profile im Querschnitt recht komplex gestaltet. An den Gehrungen treten daher besondere Nahtstellen auf, die selbst bei guter mechanischer Ausführung problematisch sein können, denn die einzufassende Glasscheibe muß fest und dicht mit dem Rahmen verbunden werden. Dazu hat man zusätzliche, ebenfalls auf Gehrung geschnittene Deckleisten aufgebracht, z.B. durch Einclipsen oder Verschrauben. Um störende Gehrungsspalte oder Überlappungen zu vermeiden, müssen solche Leisten paßgenau gefertigt sein, sonst ist kostspielige Nacharbeit bei der Kollektorproduktion die Folge. Für eine Rohrdurchführung im Randbereich sind speziell bearbeitete Eckwinkel notwendig.

Bei anderen Konstruktionen hat man die Scheibe lediglich durch eine Silikonraupe mit dem Faltrahmen verbunden, wobei das Silikon-Glattziehen entlang der gegebenen Fuge vom handwerklichen Geschick des Ausführenden abhängt, zumal der Kollektor innerhalb einer Topfzeit von mindestens 60 min nicht bewegt werden darf. Dadurch wird der Produktionsfluß unterbrochen; auch sind große Lagerflächen unerläßlich. Die resultierende Verklebung ist prinzipiell unsicher, weil es bei nachlassender Kleberfestigkeit zum Ablösen und Herabstürzen der Glasscheibe kommen kann.

Es ist ein wichtiges Ziel der Erfindung, diese und weitere Nachteile des Standes der Technik mit wirtschaftlichen Mitteln zu überwinden und ein verbessertes Kollektorgehäuse zu schaffen, das sich mit einfacheren Montageschritten und geringerem Materialeinsatz herstellen läßt. Das Gehäuse soll weniger Bauteile als herkömmlich erfordern und zugleich die Glasabdeckung zuverlässig fassen, um maximalen Schutz gegen herabfallendes Glas zu gewährleisten.

Hauptmerkmale der Erfindung sind in den Ansprüchen 1 und 10 angegeben. Ausgestaltungen sind Gegenstand der Ansprüche 2 bis 9 und 11 bis 15.

Ein Kollektorgehäuse zur Aufnahme eines Solarabsorbers, mit einer ihn oben abdeckenden, insbesondere rechteckigen Glasscheibe, unter der sich Wärmedämm-Material und eine Rückwand befinden, zeichnet sich erfindungsgemäß laut Anspruch 1 dadurch aus, daß die Glasscheibe mit einem Rahmen umschlossen ist, der zusammenhängende oder zusammengesetzte Rahmenleisten mit nach innen ragenden Rippen aufweist, welche die Glasscheibe an ihrem Umfang formschlüssig fassen, wobei an einer unteren Rahmenleiste ein Rippenteil bis auf eine Kante teilentfernt ist, an der sich das untere Ende der eingeschobenen Glasscheibe abstützt.

Der Gehäuserahmen ist dadurch stabil sowie rasch und kostengünstig herstell- und montierbar. Er bietet den Vorteil großer Sicherheit für die Halterung der Glasscheibe. Der außen vorzugsweise glatte und insbesondere eben begrenzte Rahmen erlaubt eine bequeme, verletzungsfreie Handhabung und sorgt für ungehinderten Regenwasserabfluß. Sehr vorteilhaft ist, daß die Glasscheibe bei der Montage an der unteren Rahmenleiste über die Profilkante hinweg einschiebbar ist und dabei zugleich an ihrem Umfang eingefaßt wird.

Die Rahmenleisten sind insbesondere von einem Profilstrang gebildet, der dem Scheiben-Umfang entsprechend abgelängt ist und einen oberen bzw. äußeren Bereich mit einwärts gerichteten Rippen sowie einen unteren bzw. bodenseitigen Stützbereich mit einer T-Nut und Klemm-Elementen aufweist. Dank dieser Gestaltung sind optimale Voraussetzungen für das Einfassen der Glasscheibe und das Haltern auch des darunter befindlichen Materials gegeben.

Am Profilstrang sind in für die vorgesehenen Rahmenecken bestimmten Abständen V-Ausklinkungen vorgesehen, so daß vier Rahmenleisten gebildet sind, die jeweils an Gehrungs-Biegekanten einteilig zusammenhängen. Diese Leisten lassen sich jeweils im rechten Winkel einwärts biegen und bilden gefaltet den Rahmen insgesamt. Es sind mithin keine separaten Deckleisten notwendig, um das Gehäuse abzuschließen; man kommt also mit geringerem Materialeinsatz sowie kleinerem Fertigungs- und Montageaufwand aus, und das Problem zu großer Gehrungsspalte tritt nicht auf. Auch sind weder Eckwinkel noch ein Kantenbearbeiten (etwa für Rohrdurchführungen im Randbereich) notwendig, da lediglich Biegekanten vorhanden sind, die man nicht entgraten muß. Im gefalteten Rahmen bildet die Innenrippen des Leistenprofils eine Aufnahmenut für die Glasscheibe, so daß sie besonders zuverlässig gehalten wird, wobei eingefügtes Dichtungsgummi eine Kederfunktion ausübt. Der untere Glasscheibenrand ist bevorzugt mit der Rahmenunterleiste verklebt, namentlich durch eine Silikonversiegelung, die zugleich das Gehäuse versteift. Insbesondere Seitenleisten des Rahmens können abgedichtete Durchlässe für innen mit dem Kollektor verbundene Rohrstutzen aufweisen; auch diese Anordnung trägt zur Stabilität des Gehäuses bei.

Beachtliche Vorteile der Erfindung beruhen auf der Ausbildung des Profilstrangs, der bevorzugt aus Aluminium besteht, das mit einem Oberflächenschutz versehen, z.B. eloxiert sein kann. Der profilierte Aluminiumstrang hat geringes Gewicht, gewährleistet aber schon durch sein Profil eine Mindest-Rahmenfestigkeit.

Bei einem Verfahren zum Herstellen eines Sonnenkollektorgehäuses zur Aufnahme eines Solarabsorbers, mit einer insbesondere rechteckigen Abdeck-Glasscheibe und einer Blechrückwand, sieht die Erfindung gemäß Anspruch 10 folgende Schritte vor:
a) zum Einfassen der Glasscheibe in einem Rahmen wird ein dem Scheibenumfang entsprechend abgelängter Profilstrang verwendet, der einseitig quer zur Strangrichtung verlaufende Rippen aufweist,
b) in durch die vorgesehenen Rahmenecken bestimmten Abständen des Profilstrangs werden V-förmige Ausklinkungen so vorgenommen, daß der Profilstrang vier an Gehrungs-Biegekanten zusammenhängende Rahmenleisten bildet,
c) in der als unteres Rahmenteil vorgesehenen Leiste wird der obere bzw. innere Teil der Rippen soweit teilentfernt, z.B. ausgeklipst, daß eine Kante stehenbleibt,
d) der Profilstrang wird an durch die Gehrungen definierten Biegekanten jeweils rechtwinklig einwärts abgekantet, zu einem Viereck-Rahmen mit einer durch die Rippen definierten Glasaufnahmenut zusammengebogen und an den Profilstrang-Enden fixiert,
e) die Glasscheibe wird in die Nut des zusammengebogenen Rahmens von unten über die stehengebliebene Kante hinweg so eingeschoben, daß das untere Scheiben-Ende sich an der Kante formschlüssig abstützt.

Weil der Material- und Arbeitsaufwand die Herstellkosten und damit die Vermarktbarkeit bestimmt, gewinnen die Optimierungsmaßnahmen besondere Bedeutung. Das neue Verfahren hat sich als überaus wirtschaftlich erwiesen. Es gelingt mit wenigen, leicht auszuführenden Schritten, die Grundgestalt des Kollektorgehäuses zu schaffen und es unter Aufnahme der abdeckenden Glasscheibe mechanisch zu stabilisieren.

Der Rahmen wird durch Fixierung der Profilstrang-Enden geschlossen. Diese können an einer Ecke zusammengefügt werden, doch ist es einfacher und kostengünstiger, einen stumpfen Stoß in der Mitte einer Rahmenkante z.B. mit einem flachen Nietblech zu überbrücken. Zur Glasabdichtung wird entlang den Seitenleisten und der oberen Leiste ein Endlos-Dichtgummi eingelegt, bevorzugt eine preiswerte, den Längenmaßen dieser Leisten entsprechende Dichtlippe mit Kederfunktion. Für die weniger belasteten und also eher unkritischen Rahmenteile genügt das. An der unteren Leiste und an den anschließenden Gehrungs-Ecken wird eine Silikonversiegelung angebracht, die dauerhafte Dichtigkeit zuverlässig gewährleistet, zumal in dem auf einem geneigten Dach montierten Gehäuse das Gewicht der - an ihrem unteren Ende in der Rahmenleiste weichelastisch abgestützten - Glasscheibe auf der Kante ruht.

Über die Fixierung durch die Dichtelemente hinaus bietet die Einfassung der Glasscheibe in der Aufnahmenut des metallischen Rahmenprofils zusätzliche Sicherheit gegen Herausfallen. Durch die Verklebung der Scheibe an den Rahmenleisten und Eckbereichen wird zugleich eine hohe Torsionsfestigkeit des Gehäuses erzielt. Der Aufwand vulkanisierter Dichtgummi-Ecken ist nicht nötig, und es muß auch keine Abbindezeit eingeplant und abgewartet werden, weil bereits die oben und seitlich angebrachte Dichtlippe die eingeschobene Scheibe ausreichend gegen Verrutschen fixiert. Das mit dem Bodenblech versehene und am unteren Glascheiben-Rand silikonversiegelte Gehäuse kann ja sofort eingelagert werden, so daß die Fertigungsdauer erheblich verkürzt wird, weil die herkömmlichen "offenen Zeiten" entfallen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine Draufsicht auf ein Gehäuse,
- Fig. 2: eine Seitenansicht eines Profils,
- Fig. 3: eine Innenansicht eines Profilstrangs,
- Fig. 4: eine Außenansicht des Profilstrangs von Fig. 3,
- Fig. 5: eine Draufsicht auf ein Gehäuse von abgewandelter Bauform,
- Fig. 5a: eine Längsschnittansicht entsprechend der Linie Va-Va in Fig. 5,
- Fig. 5b: eine Querschnittansicht entsprechend der Linie Vb-Vb in Fig. 5,
- Fig. 6: eine vergrößerte Teilschnittansicht entsprechend dem Kreis VI in Fig. 5,
- Fig. 6a: eine vergrößerte Teilschnittansicht entsprechend dem Kreis Vla in Fig. 5a und
- Fig. 6b: eine vergrößerte Teilschnittansicht entsprechend dem Kreis Vlb in Fig. 5b.

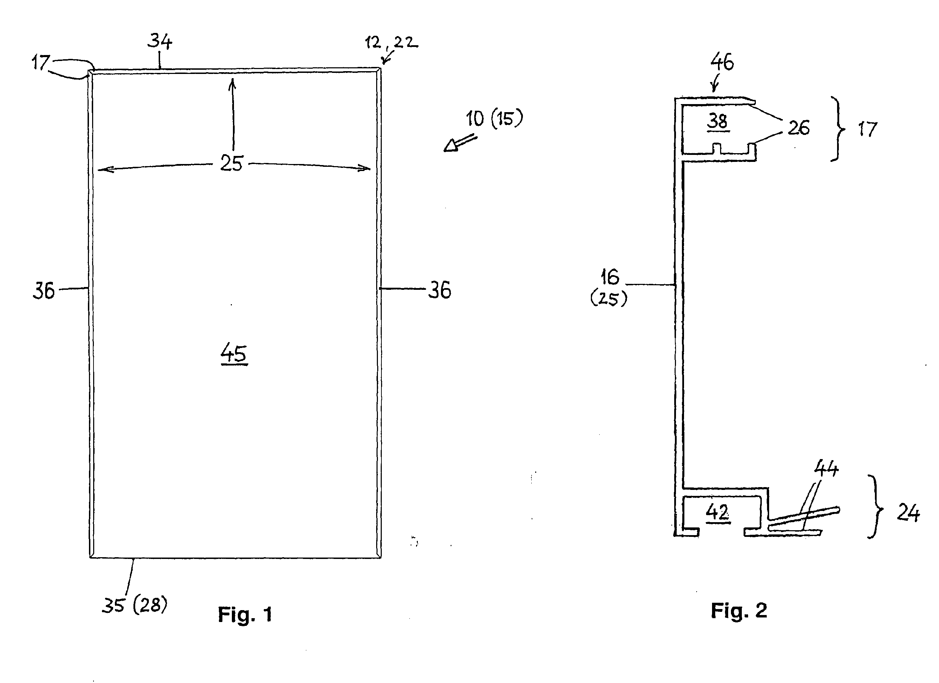

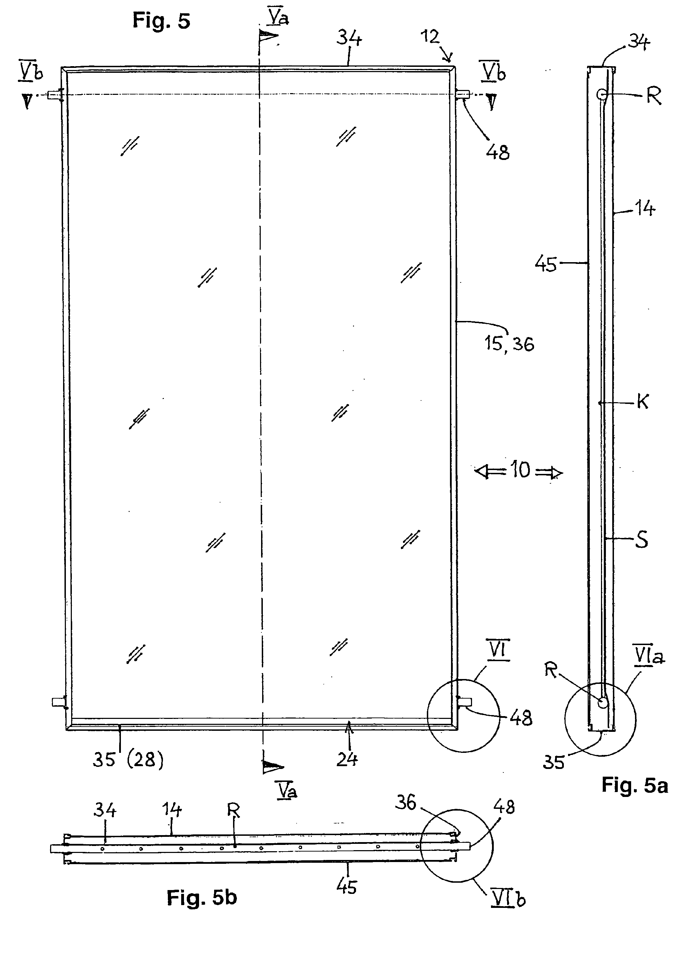

In Fig. 1 stellt ein allgemein mit 10 bezeichnetes, Ecken 12 aufweisendes Gehäuse dar, in dem eine rechteckige Glasscheibe 14 (vergl. Fig. 5) durch einen Rahmen 15 gefaßt ist. Dieser besteht aus vier Leisten 25, die an den Ecken 12 zusammenhängen, nämlich einer oberen Rahmenleiste 34, einer unteren Rahmenleiste 35 und zwei Seitenleisten 36. Mit 45 ist eine insbesondere aus Blech bestehende Rückwand gekennzeichnet.

Der Rahmen 15 ist aus einem Profilstrang 16 gebildet, dessen Profil gemäß Fig. 2 an seiner Außenseite glatt und eben begrenzt ist. Nach innen hat es einen oberen Einfassungsbereich 17 mit einwärts gerichteten Rippen 26, die eine Aufnahmenut 38 bilden, sowie einen unteren Stützbereich 24 mit einer bodenseitig offenen T-Nut 42 und mit Klemm-Elementen 44, die zur Abstützung der Rückwand 45 aufwärts federn.

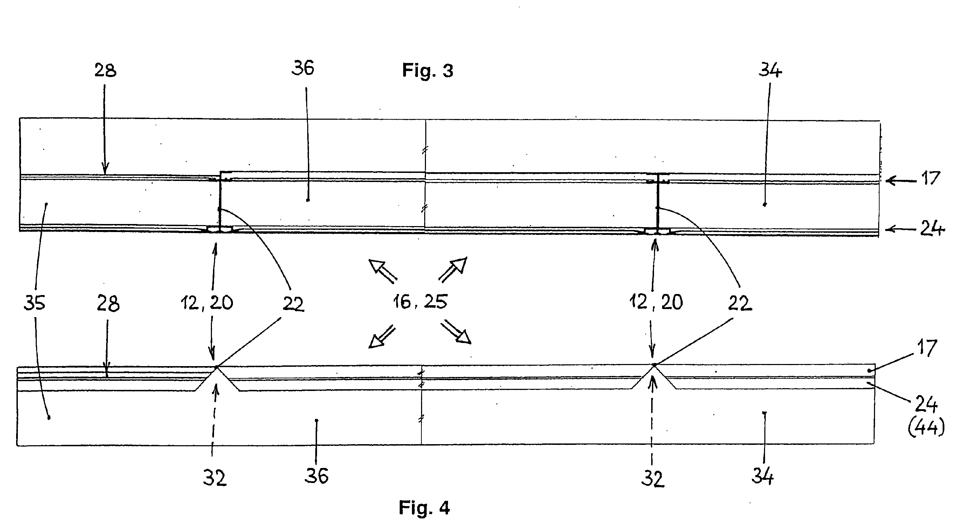

Aus Fig. 3 und 4 geht hervor, wie der Rahmen 15 aufgebaut ist. An dem Profilstrang 16 sind in Eck-Abständen, die durch die Maße der zu fassenden Glasscheibe 14 bestimmt sind, in den einspringenden Bereichen 17, 24 jeweils miteinander fluchtende V-förmige Ausklinkungen 20 vorgesehen. So sind Gehrungs-Biegekanten 22 gebildet, an denen die Rahmenleisten 25 einteilig zusammenhängen. Während die obere Rahmenleiste 34 und die Seitenleisten 36 ihr volles Profil auf der ganzen Länge behalten, ist an der unteren Rahmenleiste 35 durch Ausklinken am oberen Bereich 17 ein Teil des Profils entfernt, wie in Fig. 3 und 4 jeweils links dargestellt. Dadurch ist eine Leistenkante 28 gebildet, die eine besondere Funktion hat.

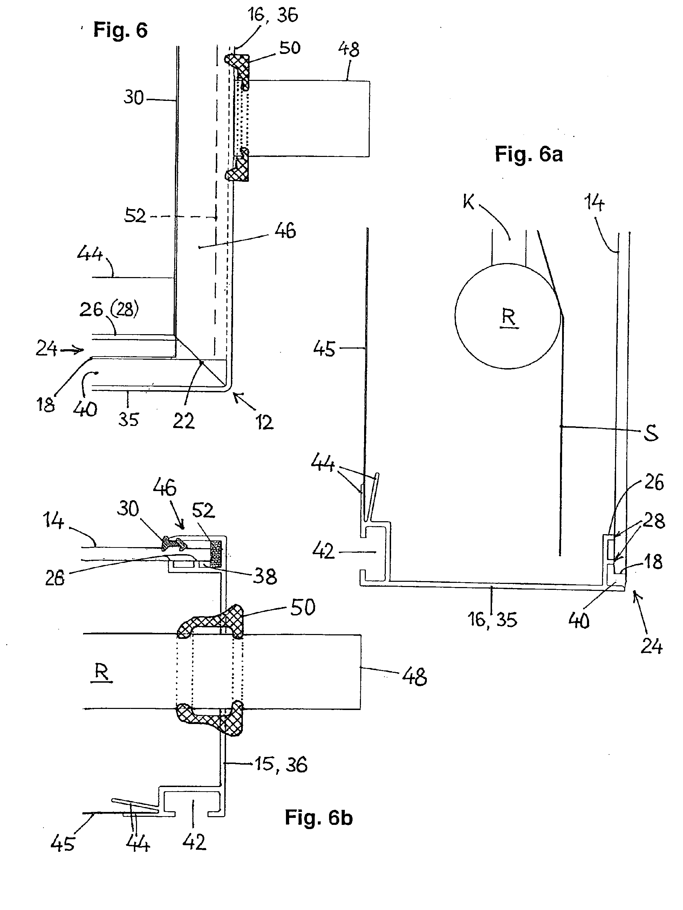

Der Rahmen 15 wird durch rechtwinkliges Einfalten der Leisten 25 gebildet, wobei die V-Ausklinkungen 20 sich an den Ecken 12 zu Gehrungsbereichen fügen, an denen die Biegekanten 22 den Zusammenhang gewährleisten. Weil an der unteren Rahmenleiste 35 der Einfassungsbereich 17 durch Ausklipsen des oberen bzw. inneren Rippenteils 46 entfernt ist, kann die Glasscheibe 14 zur Montage von unten in den Rahmen 15 eingeschoben werden, wobei sie an ihren Längskanten und zum Schluß auch an der Oberkante von der Aufnahmenut 38 im Einfassungsbereich 17 formschlüssig aufgenommen wird. Bei diesem Vorgang wird die Scheibe 14 über die erzeugte Kante 28 der unteren Rahmenleiste 35 hinweggehoben; in der ganz eingeschobenen Position fällt die Scheibe 14 hinter der Leistenkante 28 des Profils 16 ein, so daß der untere Rand 18 der Scheibe 14 an dem Stützbereich 24 verrastet (vergl. Fig. 6 und 6a). Sie wird dabei am Boden der Aufnahmenut 38 von einem weichelastischen Einsatz 52 abgestützt, z.B. einem Moosgummi (Fig. 6b).

Ein fertiges Gehäuse 10 ist in Fig. 5, 5a, 5b dargestellt. Man erkennt, daß anders als bei herkömmlichen Konstruktionen keine Abdeck- oder Verbindungselemente an den Ecken 12 notwendig sind. Die Scheibe 14 ist an der oberen Rahmenleiste 34 und an den Seitenleisten 36 durch eine Elastik-Dichtung nach außen bzw. oben abgedichtet, bevorzugt durch eine kostengünstige Gummi-Dichtlippe 30 (vergl. Fig. 6 und 6b) mit Kederfunktion, während an der unteren Rahmenleiste 35 sowie an den benachbarten Eckbereichen eine Silikonversiegelung 40 angebracht ist. Diese Verklebung bewirkt eine Versteifung des Gehäuses 10, das dadurch eine hohe Torsionsfestigkeit erhält.

Die Außenseite des Rahmens 15 ist durchgehend glatt, bis auf Durchlässe für Rohrstutzen 48, die im Rahmen 15 von Dichtungen 50 gefaßt sind. Die Stutzen 48 sind mit Verteilerrohren R strömungsverbunden, die oben und unten an einen (im Übrigen nicht näher gezeigten) Kollektor K anschließen, wie in Fig. 5a und 6a angedeutet ist. Dieser liegt in unmittelbar wärmeleitendem Kontakt an einem Solarabsorber S an (siehe Fig. 5a und 6a), welcher der Glasscheibe 14 gegenübersteht.

Die Erfindung ist nicht auf eine der vorbeschriebenen Ausführungsformen beschränkt, sondern vielfältig abwandelbar. So läßt sich die beschriebene Glasabdeckung auch für Kollektoren verwenden, die einen an den Ecken verschweißten Metallrahmen haben. Dabei werden für die Seiten und den oberen Teil Profile benutzt, die über eine geschlossene Glasaufnahme verfügen, während am unteren Rahmenprofil eine oben offene Glashalterung vorgesehen ist, so daß die Scheibe auch in den zusammengeschweißten Rahmen von dessen unterem Ende her eingeschoben werden und anschließend (wie beschrieben) mit einer dreiseitig umlaufenden Gummidichtung versehen werden kann, während nur an der unteren Rahmenleiste - nicht aber im verschweißten Eckverbund - ein Flüssigdichtstoff angebracht wird, vorzugsweise Silikon. Dieses Vorgehen ist insbesondere für Kollektorrahmen interessant, die randseitig Bleche zur Dacheinbindung für die Indach-Montage aufweisen, wobei die Kollektorausrichtung über die Wasserführung naturgemäß vorgegeben ist.

Man erkennt jedoch, daß eine bevorzugte Bauform eines Kollektorgehäuses 10 zur Aufnahme eines Solarabsorbers S sich durch einen Rahmen 15 auszeichnet, der aus zusammenhängenden Rahmenleisten 25 gebildet ist und dessen Profil 16 in seinem oberen Bereich 17 entlang der unteren Rahmenleiste 35 bis auf eine Kante 28 eingekürzt ist, an der sich der untere Rand 18 einer Abdeck-Glasscheibe 14 im Gehäuse 10 abstützt. Dank dieses sehr vorteilhaften Aufbaues vollzieht sich die Montage außerordentlich rasch und kostensparend. Zum Herstellen des Gehäuses 10 wird ein entsprechend dem Umfang abgelängter Profilstrang mit einseitig quer zur Strangrichtung verlaufenden Rippen 26 verwendet, der in für die vorgesehenen Ecken 32 bestimmten Abständen mit Gehrungsschnitten versehen wird, so daß er vier an Gehrungskanten 22 zusammenhängende Rahmenleisten 25 bildet. An der unteren Rahmenleiste 35 wird der obere/innere Teil der Rippen 26 soweit entfernt, daß eine Leistenkante 28 stehenbleibt. Dann wird der Profilstrang an den Gehrungskanten 22 jeweils rechtwinklig eingefaltet, d.h. zu einem Rahmen 15 mit einer durch die Rippen 26 definierten Glasaufnahmenut 38 zusammengebogen und an seinen Enden fixiert, worauf die Glasscheibe 14 in die Nut 38 des gebildeten Rahmens 15 von unten über die Leistenkante 28 hinweg so eingeschoben wird, daß das untere Scheiben-Ende 18 sich daran formschlüssig abstützt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- K: Kollektor
- R: (Verteiler-)Rohr
- S: Solarabsorber

- 10: Gehäuse
- 12: Ecken
- 14: Glasscheibe
- 15: Rahmen
- 16: Profilstrang
- 17: oberer (Einfassungs-) Bereich
- 18: Unterkante / unteres Ende
- 20: V-Ausklinkungen
- 22: (Gehrungs-) Biegekanten
- 24: (unterer) Stützbereich
- 25: Rahmenleisten
- 26: Rippen
- 28: (Leisten-) Kante
- 30: Dichtgummi / Keder
- 32: (Gehrungs-) Ecken
- 34: obere Rahmenleiste
- 35: untere Rahmenleiste
- 36: Seitenleisten
- 38: Aufnahmenut
- 40: Silikonversiegelung
- 42: T-Nut
- 44: Klemm-Elemente
- 45: Rückwand
- 46: oberer / innerer Rippenteil
- 48: Rohrstutzen
- 50: Dichtung
- 52: (Moosgummi-)Einsatz

## Patentansprüche

1. Kollektorgehäuse (10) zur Aufnahme eines Solarabsorbers (S), mit einer ihn oben abdeckenden, insbesondere rechteckigen Glasscheibe (14), unter der Wärmedämm-Material und eine Rückwand (45) Platz finden, **dadurch gekennzeichnet, daß** die Glasscheibe (14) in einem Rahmen (15) sitzt, der zusammenhängende oder zusammengesetzte Rahmenleisten (25) mit Rippen (26) aufweist, welche die Glasscheibe (14) an ihrem Umfang formschlüssig fassen, wobei an einer unteren Rahmenleiste (35) ein Rippenteil (46) bis auf eine Kante (28) teilentfernt ist, an der sich das untere Ende (18) der eingeschobenen Glasscheibe (14) abstützt.

2. Gehäuse nach Anspruch 1, **dadurch gekennzeichnet, daß** die Rahmenleisten (25) von einem Profilstrang (16) gebildet sind, der entsprechend dem Scheiben-Umfang abgelängt ist und in jeweils den Rahmenecken (12) zugeordneten Abständen V-Ausklinkungen (20) für Gehrungs-Biegekanten (22) aufweist.

3. Gehäuse nach Anspruch 1 oder 2, **dadurch gekennzeichnet, daß** der Rahmen (15) im Wesentlichen außen glatt, insbesondere eben begrenzt ist.

4. Gehäuse nach Anspruch 2 oder 3, **dadurch gekennzeichnet, daß** der Profilstrang (16) einen oberen Bereich mit einwärts gerichteten Rippen (26) und einen unteren Stützbereich (24) mit einer Schraub- oder T-Nut (42) und Klemm-Elementen (44) aufweist.

5. Gehäuse nach einem der Ansprüche 1 bis 4, **dadurch gekennzeichnet, daß** zur Abdichtung entlang Seitenleisten (36) und einer Oberleiste (34) zwischen der Glasscheibe (14) und dem Rahmen (15) eine Elastik-Dichtung eingelegt ist, insbesondere eine einteilige Dichtlippe (30).

6. Gehäuse nach einem der Ansprüche 1 bis 5, **dadurch gekennzeichnet, daß** an der als unteres Rahmenteil vorgesehenen Leiste (35) sowie an ihr benachbarten Gehrungs-Ecken (32) eine Silikonversiegelung (40) angebracht ist.

7. Gehäuse nach einem der Ansprüche 4 bis 6, **dadurch gekennzeichnet, daß** das Leistenprofil (16) im gefalteten Rahmen (15) mit den Rippen (26) eine Aufnahmenut (38) für die Glasscheibe (14) bildet.

8. Gehäuse nach einem der Ansprüche 1 bis 7, **dadurch gekennzeichnet, daß** der Profilstrang (16) aus Aluminium besteht.

9. Gehäuse nach einem der Ansprüche 1 bis 8, **dadurch gekennzeichnet, daß** Leisten (25), insbesondere Seitenleisten (36) des Rahmens (15) abgedichtete Durchlässe (D) für innen mit dem Kollektor (K) verbundene Rohrstutzen (48) aufweisen.

10. Verfahren zum Herstellen eines Kollektorgehäuses zur Aufnahme eines Solarabsorbers, mit einer insbesondere rechteckigen Abdeck-Glasscheibe und einer Blechrückwand, **gekennzeichnet durch** folgende Schritte:
a) zum Einfassen der Glasscheibe wird ein entsprechend ihrem Umfang abgelängter Profilstrang verwendet, der einseitig quer zur Strangrichtung verlaufende Rippen aufweist,
b) in für die vorgesehenen Ecken bestimmten Abständen des Profilstrangs werden Gehrungsschnitte so vorgenommen, daß er vier an Gehrungen zusammenhängende Rahmenleisten bildet,
c) in der als unteres Rahmenteil vorgesehenen Leiste wird der obere bzw. innere Teil der Rippen soweit entfernt, daß eine Kante stehenbleibt,
d) der Profilstrang wird an **durch** die Gehrungen definierten Biegekanten jeweils rechtwinklig einwärts abgekantet, zu einem Viereck-Rahmen mit einer **durch** die Rippen definierten Glasaufnahmenut zusammengebogen und an den Profilstrang-Enden fixiert,
e) die Glasscheibe wird in die Nut des zusammengebogenen Rahmens von unten über die stehengebliebene Kante hinweg so eingeschoben, daß das untere Scheiben-Ende sich an der Kante formschlüssig abstützt.

11. Verfahren nach Anspruch 10, **dadurch gekennzeichnet, daß** die Fixierung der Profilstrang-Enden in stumpfem Stoß durch Überbrückung in der Mitte einer Rahmenkante erfolgt, bevorzugt mit einem flachen Nietblech.

12. Verfahren nach Anspruch 10 oder 11, **dadurch gekennzeichnet, daß** zur Abdichtung entlang den Seitenleisten und der Oberleiste zwischen der Glasscheibe und dem Rahmen eine Elastik-Dichtung eingelegt wird.

13. Verfahren nach Anspruch 12, **dadurch gekennzeichnet, daß** zur Abdichtung im Bereich der Seitenleisten und der Oberleiste eine Dichtlippe benutzt wird, deren Länge der Längenmaßsumme dieser Leisten entspricht.

14. Verfahren nach einem der Ansprüche 10 bis 13, **dadurch gekennzeichnet, daß** an den Rahmenleisten sowie an ihren benachbarten Gehrungs-Ecken eine Verklebung mit dem Rand der Glasscheibe erfolgt.

15. Verfahren nach einem der Ansprüche 10 bis 14, **dadurch gekennzeichnet, daß** das mit der Blechrückwand versehene Gehäuse am unteren Glascheiben-Rand mit einer Silikonversiegelung versehen wird.
